# EUROPÄISCHE PATENTSCHRIFT

(11) **EP 4 405 709 B1**
(45) Veröffentlichungstag und Bekanntmachung des Hinweises auf die Patenterteilung: **25.03.2026**
(21) Anmeldenummer: 22772995.1
(22) Anmeldetag: 07.09.2022
(51) Int. Cl.: G01S 7/497, G01M 11/00, G01S 17/04, G01S 17/931

(54) **VORRICHTUNG UND VERFAHREN ZUR PRÜFUNG EINES VON EINEM LASERSCANNER EINES FAHRZEUGS ÜBERWACHTEN SCHUTZFELDS**
DEVICE AND METHOD FOR CHECKING A PROTECTION ZONE MONITORED BY A LASER SCANNER OF A VEHICLE
DISPOSITIF ET PROCÉDÉ DE CONTRÔLE D'UN CHAMP DE PROTECTION SURVEILLÉ PAR UN SCANNER LASER D'UN VÉHICULE

(30) Priorität: 24.09.2021 DE 102021004817
(43) Veröffentlichungstag der Anmeldung: 31.07.2024
(73) Patentinhaber: SEW-EURODRIVE GmbH & Co. KG, 76646 Bruchsal (DE)
(72) Erfinder: DEGEN, Dirk, 76646 Bruchsal (DE); MARKHEISER, Tobias, 74889 Sinsheim, Elsenz (Hilsbach) (DE); ERB, Frank, 76137 Karlsruhe (DE); SCHNEIDER, Matthias, 76646 Bruchsal (DE); FARES, Fares, 76646 Bruchsal (DE)
(86) Internationale Anmeldenummer: PCT/EP2022/074895
(87) Internationale Veröffentlichungsnummer: WO 2023/046483

(56) Entgegenhaltungen:
- CN-A- 113 050 072
- US-A1- 2021 134 079

## Beschreibung

Die Erfindung betrifft eine Vorrichtung zur Prüfung eines von einem Laserscanner eines Fahrzeugs überwachten Schutzfelds. Die Erfindung betrifft auch ein Verfahren zur Prüfung eines von einem Laserscanner eines Fahrzeugs überwachten Schutzfelds mittels einer erfindungsgemäßen Vorrichtung.

In verschiedenen Anlagen, beispielsweise in Supermärkten, Industriehallen, Logistikzentren, Krankenhäusern und Produktionswerken, sind fahrerlose Transportfahrzeuge einsetzbar. Die fahrerlosen Transportfahrzeuge dienen beispielsweise zum Transport von Gegenständen, insbesondere von Ladungsträgern, innerhalb der jeweiligen Anlage. Ein solches Fahrzeug weist Sensoren, insbesondere Laserscanner, zur Erfassung von Objekten und Personen in definierten Schutzfeldern auf.

Aus dem Dokument DE 10 2019 001 253 A1 ist ein Verfahren zum Betreiben einer technischen Anlage bekannt, welche ein fahrerlose Transportfahrzeug aufweist, das auf einer Verkehrsfläche der technischen Anlage verfahrbar ist. Das fahrerlose Transportfahrzeug erfasst mit Hilfe von entsprechenden Sensoren Objekte in der technischen Anlage.

Aus der DE 10 2016 010 847 A1 sind eine dynamische Prüfvorrichtung und ein Verfahren zur Inspektion einer Prüfoberfläche eines Prüfgegenstands bekannt. Die Prüfvorrichtung umfasst eine Beleuchtungseinheit zum Projizieren eines Lichtsignals auf die Prüfoberfläche.

Aus der DE 10 2020 131 662 B3 sind ein Verfahren und ein Gonioradiometer zur richtungsabhängigen Messung mindestens einer lichttechnischen oder radiometrischen Kenngröße einer in ein Objekt eingebauten optischen Strahlungsquelle bekannt.

Aus der US 2021/0134079 A1 eine Vorrichtung zur Prüfung von Sensoren eines Fahrzeugs bekannt. Die Vorrichtung umfasst einen Drehtisch, auf welchem das Fahrzeug während einer Prüfung abgestellt wird.

Aus der CN 113 050 072 A ist ein System zur Prüfung von Lidarsensoren bekannt. Das System umfasst einen Drehtisch und eine Linearführung.

Ein Fahrzeug weist eine Vielzahl von Schutzfeldern auf, welche von den Laserscannern überwacht werden. Wenn ein Laserscanner in einem überwachten Schutzfeld ein Objekt oder eine Person entdeckt, so wird beispielsweise eine Warnmeldung generiert oder das Fahrzeug angehalten. Bei der Inbetriebnahme, gegebenenfalls auch in bestimmten Wartungsinterwallen, sind zum Nachweis der Funktionalität die Schutzfelder zu kontrollieren. Es ist bekannt, einen Prüfkörper nacheinander an mehreren Prüfpositionen innerhalb und außerhalb des zu kontrollierenden Schutzfelds zu positionieren. Für jede Prüfposition ist dann zu prüfen, ob der Prüfkörper von dem Schutzfeld erfasst wird oder nicht.

Der Erfindung liegt die Aufgabe zugrunde, eine Vorrichtung und ein Verfahren zur Prüfung eines von einem Laserscanner eines Fahrzeugs überwachten Schutzfelds weiterzubilden.

Die Aufgabe wird durch eine Vorrichtung zur Prüfung eines von einem Laserscanner eines Fahrzeugs überwachten Schutzfelds mit den in Anspruch 1 angegebenen Merkmalen gelöst. Vorteilhafte Ausgestaltungen und Weiterbildungen sind Gegenstand der Unteransprüche. Die Aufgabe wird auch durch ein Verfahren zur Prüfung eines von einem Laserscanner eines Fahrzeugs überwachten Schutzfelds mit den in Anspruch 10 angegebenen Merkmalen gelöst.

Eine erfindungsgemäße Vorrichtung zur Prüfung eines von einem Laserscanner eines Fahrzeugs überwachten Schutzfelds umfasst einen Drehtisch zur Aufnahme eines Fahrzeugs und einen Prüfkörper. Dabei ist der Drehtisch um eine Drehachse drehbar, und der Prüfkörper ist relativ zu der Drehachse translatorisch beweglich.

Durch eine Drehung des Drehtischs mit einem darauf befindlichen Fahrzeug um die Drehachse und eine translatorische Bewegung des Prüfkörpers relativ zu der Drehachse sind beliebige Entfernungen und Ausrichtungen des Prüfkörpers relativ zu dem Fahrzeug einstellbar. Damit sind auch beliebige Prüfpositionen einstellbar, in denen der Prüfkörper sich innerhalb sowie außerhalb eines definierten Schutzfeldes befindet. Eine manuelle, zeitaufwendige Positionierung des Prüfkörpers an mehreren Prüfpositionen ist somit nicht erforderlich. Eine Prüfung eines von einem Laserscanner eines Fahrzeugs überwachten Schutzfelds ist somit mittels der erfindungsgemäßen Vorrichtung vorteilhaft vereinfacht.

Erfindungsgemäß umfasst die Vorrichtung einen Grundkörper und eine an dem Grundkörper befestigte Schiene. Dabei ist der Drehtisch relativ zu dem Grundkörper drehbar, und der Prüfkörper ist entlang der Schiene beweglich. Dadurch weist die Vorrichtung einen verhältnismäßig kompakten Aufbau auf.

Erfindungsgemäß ist an dem Drehtisch eine Aufnahmeplatte befestigt, welche mehrere Klammern zur Befestigung des Fahrzeugs aufweist.

Gemäß einer bevorzugten Ausgestaltung der Erfindung ist der Prüfkörper dabei relativ zu der Drehachse in eine Radialrichtung beweglich. Die gewünschten Prüfpositionen sind somit einfach durch Angabe entsprechender Zylinderkoordinaten darstellbar.

Gemäß einer bevorzugten Ausgestaltung der Erfindung erstreckt die Schiene sich relativ zu der Drehachse in eine Radialrichtung.

Gemäß einer vorteilhaften Weiterbildung der Erfindung umfasst die Schiene mehrere Segmente, die, beginnend an dem Grundkörper, in Radialrichtung hintereinander angeordnet sind.

Gemäß einer bevorzugten Ausgestaltung der Erfindung verläuft die Drehachse rechtwinklig zu einem Boden, auf welchem die Vorrichtung angeordnet ist, in eine Vertikalrichtung.

Gemäß einer vorteilhaften Ausgestaltung der Erfindung ist der Prüfkörper kreiszylindrisch ausgebildet, und eine Mittelachse des Prüfkörpers verläuft parallel zu der Drehachse. Ein derart ausgebildeter Prüfkörper ist zur Prüfung von Schutzfeldern als besonders geeignet und nach Norm vorgeschrieben.

Gemäß einer bevorzugten Weiterbildung der Erfindung umfasst die Vorrichtung eine erste Antriebseinheit zum rotatorischen Antrieb des Drehtischs und eine zweite Antriebseinheit zum translatorisch Antrieb des Prüfkörpers. Dadurch ist die Positionierung des Prüfkörpers an mehreren Prüfpositionen weiter vereinfacht.

Gemäß einer vorteilhaften Weiterbildung der Erfindung weist die erste Antriebseinheit einen Elektromotor und ein Getriebe auf. Gemäß einer vorteilhaften Weiterbildung der Erfindung weist die zweite Antriebseinheit einen Elektromotor und ein Getriebe auf. Das Getriebe zum rotatorischen Antrieb des Drehtischs ist beispielsweise ein Zahnradgetriebe. Das Getriebe zum translatorisch Antrieb des Prüfkörpers ist beispielsweise ein Riementrieb.

Gemäß einer vorteilhaften Ausgestaltung der Erfindung umfasst die Vorrichtung eine Recheneinheit, welche eine Steuereinheit zur Ansteuerung der Antriebseinheiten, eine Prüfeinheit zur Durchführung von Prüfungen, ob der Prüfkörper von dem Schutzfeld erfasst wird, und eine Speichereinheit zur Speicherung von Prüfergebnissen aufweist. Damit ist eine Prüfung der von einem Laserscanner eines Fahrzeugs überwachten Schutzfelder weitgehend automatisiert durchführbar. Durch entsprechende Ansteuerung der Antriebseinheiten sind die vorgegebenen Prüfpositionen einstellbar, in denen der Prüfkörper sich innerhalb sowie außerhalb eines definierten Schutzfeldes befindet. An den entsprechenden Prüfpositionen ist jeweils eine Prüfung durchführbar, und die Prüfergebnisse sind speicherbar.

Es wird auch ein Verfahren zur Prüfung eines von einem Laserscanner eines Fahrzeugs überwachten Schutzfelds mittels einer erfindungsgemäßen Vorrichtung vorgeschlagen. Dabei wird ein Fahrzeug auf dem Drehtisch der Vorrichtung positioniert. Anschließend wird der Drehtisch mit dem Fahrzeug um die Drehachse gedreht, und der Prüfkörper wird relativ zu der Drehachse translatorisch bewegt. Für eine Mehrzahl von Prüfpositionen wird geprüft, ob der Prüfkörper von dem Schutzfeld erfasst wird. Dabei ist jeder Prüfposition eine definierte Winkelposition des Drehtischs und ein definierter Abstand des Prüfkörpers zu der Drehachse zugeordnet.

Durch die Drehung des Drehtischs mit einem darauf positionierten Fahrzeug um die Drehachse und die translatorische Bewegung des Prüfkörpers relativ zu der Drehachse werden beliebige Entfernungen und Ausrichtungen des Prüfkörpers relativ zu dem Fahrzeug eingestellt. Insbesondere werden Prüfpositionen eingestellt, in denen der Prüfkörper sich innerhalb sowie außerhalb eines definierten Schutzfeldes befindet. Eine manuelle, zeitaufwendige Positionierung des Prüfkörpers an mehreren Prüfpositionen ist somit nicht erforderlich. Eine Prüfung eines von einem Laserscanner eines Fahrzeugs überwachten Schutzfelds ist somit mittels der erfindungsgemäßen Vorrichtung vorteilhaft vereinfacht.

Insbesondere wird der Drehtisch mit dem Fahrzeug durch entsprechende Ansteuerung einer ersten Antriebseinheit um die Drehachse gedreht, und der Prüfkörper wird durch entsprechende Ansteuerung einer zweiten Antriebseinheit relativ zu der Drehachse translatorisch bewegt. Für eine Mehrzahl von Prüfpositionen wird von einer Prüfeinheit geprüft, ob der Prüfkörper von dem Schutzfeld erfasst wird. Die Prüfergebnisse werden von einer Speichereinheit gespeichert. Die Antriebseinheiten, die Prüfeinheit und die Speichereinheit werden dabei von einer programmierbaren Recheneinheit gesteuert.

Die Erfindung wird nun anhand von Abbildungen näher erläutert.

Die Abbildungen stellen den Gegenstand der Erfindung nur schematisch dar. Es zeigen:
- Figur 1:: eine Seitenansicht einer Vorrichtung zur Prüfung eines von einem Laserscanner eines Fahrzeugs überwachten Schutzfelds,
- Figur 2:: eine vergrößerte Seitenansicht einer Vorrichtung zur Prüfung eines von einem Laserscanner eines Fahrzeugs überwachten Schutzfelds mit einem Fahrzeug,
- Figur 3:: eine Draufsicht auf eine Vorrichtung zur Prüfung eines von einem Laserscanner eines Fahrzeugs überwachten Schutzfelds und
- Figur 4:: eine perspektivische Darstellung einer Vorrichtung zur Prüfung eines von einem Laserscanner eines Fahrzeugs überwachten Schutzfelds.

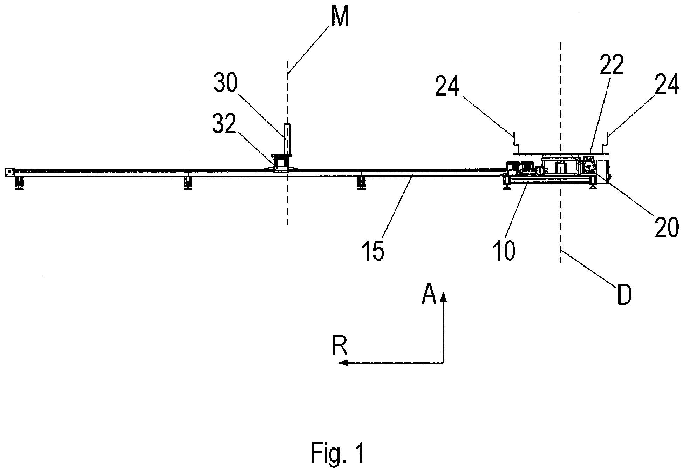

Figur 1 zeigt eine Seitenansicht einer Vorrichtung zur Prüfung eines von einem Laserscanner eines Fahrzeugs 50 überwachten Schutzfelds. Die Vorrichtung umfasst einen Grundkörper 10 und einen Drehtisch 20, welcher relativ zu dem Grundkörper 10 um eine Drehachse D drehbar ist. Der Drehtisch 20 dient zur Aufnahme eines hier nicht dargestellten Fahrzeugs 50. Dazu ist an dem Drehtisch 20 eine Aufnahmeplatte 22 befestigt, welche mehrere Klammern 24 zur Befestigung des Fahrzeugs 50 aufweist.

Die Drehachse D definiert eine Axialrichtung A. Die Drehachse D verläuft vorliegend rechtwinklig zu einem Boden, auf welchem die Vorrichtung angeordnet ist, in eine Vertikalrichtung. Die Vertikalrichtung steht senkrecht auf dem Boden. Die von der Drehachse D definierte Axialrichtung A verläuft somit in die besagte Vertikalrichtung.

Die Vorrichtung umfasst eine Schiene 15, welche an dem Grundkörper 10 befestigt ist. Die Schiene 15 erstreckt sich relativ zu der Drehachse D in eine Radialrichtung R, und somit rechtwinklig zu der Drehachse D und rechtwinklig zu der Axialrichtung A. Die Schiene 15 umfasst mehrere Segmente, die, beginnend an dem Grundkörper 10, in Radialrichtung R hintereinander angeordnet sind.

Die Vorrichtung umfasst ferner einen Prüfkörper 30, welcher auf einem Schlitten 32 montiert ist. Der Prüfkörper 30 ist mit dem Schlitten 32 entlang der Schiene 15 translatorisch beweglich. Der Prüfkörper 30 ist somit relativ zu der Drehachse D in die Radialrichtung R translatorisch beweglich. Der Prüfkörper 30 ist kreiszylindrisch ausgebildet. Eine Mittelachse M des Prüfkörpers 30 verläuft dabei parallel zu der Drehachse D und somit rechtwinklig zu dem Boden in die Vertikalrichtung.

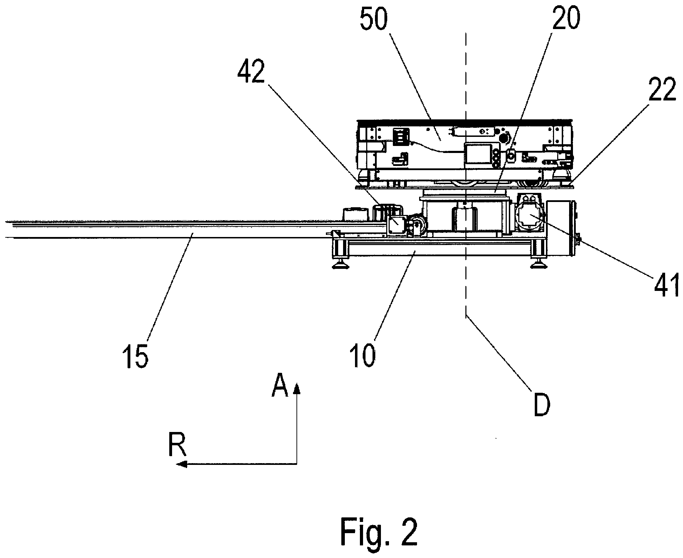

Figur 2 zeigt eine vergrößerte Seitenansicht einer Vorrichtung zur Prüfung eines von einem Laserscanner eines Fahrzeugs 50 überwachten Schutzfelds mit einem Fahrzeug 50. Das Fahrzeug 50 ist dabei mittels der Klammern 24 auf der Aufnahmeplatte 22 befestigt und somit von dem Drehtisch 20 aufgenommen. Bei einer Drehung des Drehtischs 20 um die Drehachse D erfährt auch das Fahrzeug 50 eine Drehung um die Drehachse D.

Die Vorrichtung umfasst eine erste Antriebseinheit 41 zum rotatorischen Antrieb des Drehtischs 20 relativ zu dem Grundkörper 10 um die Drehachse D. Die erste Antriebseinheit 41 weist dazu einen Elektromotor und ein Getriebe auf. Die Vorrichtung umfasst eine zweite Antriebseinheit 42 zum translatorischen Antrieb des Schlittens 32 und des Prüfkörpers 30 entlang der Schiene 15 relativ zu der Drehachse D. Die zweite Antriebseinheit 42 weist dazu einen Elektromotor und ein Getriebe auf.

Das Fahrzeug 50 umfasst mehrere, beispielsweise zwei, hier nicht explizit dargestellte Laserscanner. Die besagten Laserscanner dienen jeweils zur Überwachung von Schutzfeldern. Durch eine Drehung des Drehtischs 20 mit dem Fahrzeug 50 um die Drehachse D und eine translatorische Bewegung des Prüfkörpers 30 relativ zu der Drehachse D sind beliebige Entfernungen und Ausrichtungen des Prüfkörpers 30 relativ zu dem Fahrzeug 50 einstellbar. In der Vertikalrichtung befindet sich dabei der Prüfkörper 30 in Höhe der Laserscanner des Fahrzeugs 50.

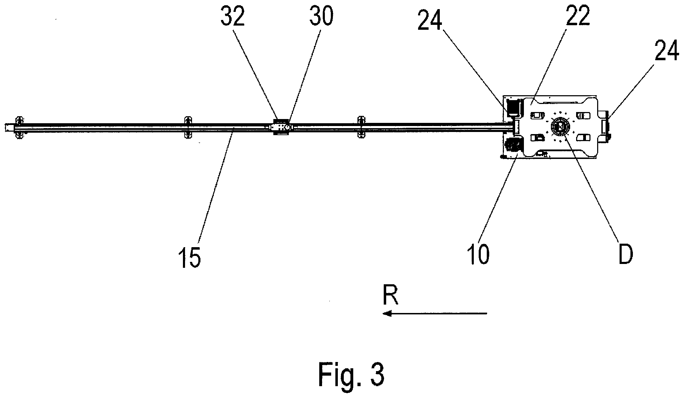

Figur 3 zeigt eine Draufsicht auf eine Vorrichtung zur Prüfung eines von einem Laserscanner eines Fahrzeugs 50 überwachten Schutzfelds. Die Schiene 15 umfasst, wie bereits erwähnt, mehrere Segmente. Die Segmente sind in Radialrichtung R hintereinander angeordnet. Die einzelnen Segmente sind voneinander sowie von dem Grundkörper 10 lösbar. Die Vorrichtung ist somit, beispielsweise zum vereinfachten Transport, in mehrere transportable Einheiten zerlegbar.

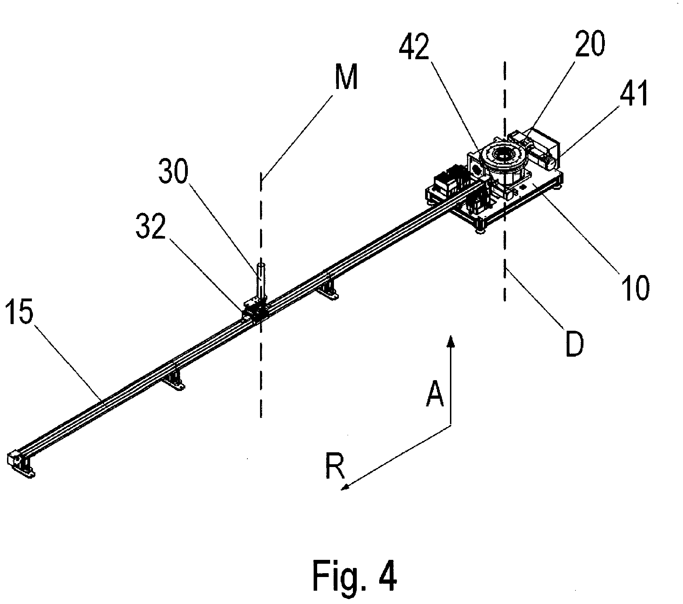

Figur 4 zeigt eine perspektivische Darstellung einer Vorrichtung zur Prüfung eines von einem Laserscanner eines Fahrzeugs 50 überwachten Schutzfelds. Die Vorrichtung umfasst eine hier nicht explizit dargestellte Recheneinheit, welche eine Steuereinheit zur Ansteuerung der Antriebseinheiten, eine Prüfeinheit zur Durchführung von Prüfungen, ob der Prüfkörper von dem Schutzfeld erfasst wird, und eine Speichereinheit zur Speicherung von Prüfergebnissen aufweist.

### Bezugszeichenliste

- 10: Grundkörper
- 15: Schiene
- 20: Drehtisch
- 22: Aufnahmeplatte
- 24: Klammer
- 30: Prüfkörper
- 32: Schlitten
- 41: erste Antriebseinheit
- 42: zweite Antriebseinheit
- 50: Fahrzeug
- A: Axialrichtung
- D: Drehachse
- M: Mittelachse
- R: Radialrichtung

## Patentansprüche

1. Vorrichtung zur Prüfung eines von einem Laserscanner eines Fahrzeugs (50) überwachten Schutzfelds, umfassend
einen Drehtisch (20) zur Aufnahme eines Fahrzeugs (50) und
einen Prüfkörper (30), wobei
der Drehtisch (20) um eine Drehachse (D) drehbar ist, und
der Prüfkörper (30) relativ zu der Drehachse (D) translatorisch beweglich ist,
**dadurch gekennzeichnet, dass**
die Vorrichtung einen Grundkörper (10) und eine an dem Grundkörper (10) befestigte Schiene (15) umfasst, wobei
der Drehtisch (20) relativ zu dem Grundkörper (10) drehbar ist, und
der Prüfkörper (30) entlang der Schiene (15) beweglich ist, und dass
an dem Drehtisch (20) eine Aufnahmeplatte (22) befestigt ist,
welche mehrere Klammern (24) zur Befestigung des Fahrzeugs (50) aufweist.

2. Vorrichtung nach Anspruch 1, **dadurch gekennzeichnet, dass**
der Prüfkörper (30) relativ zu der Drehachse (D) in eine Radialrichtung (R) beweglich ist.

3. Vorrichtung nach einem der vorangegangenen Ansprüche, **dadurch gekennzeichnet, dass** die Schiene (15) sich relativ zu der Drehachse (D) in eine Radialrichtung (R) erstreckt.

4. Vorrichtung nach einem der vorangegangenen Ansprüche, **dadurch gekennzeichnet, dass** die Schiene (15) mehrere Segmente umfasst, die, beginnend an dem Grundkörper (10), in Radialrichtung (R) hintereinander angeordnet sind.

5. Vorrichtung nach einem der vorangegangenen Ansprüche, **dadurch gekennzeichnet, dass** die Drehachse (D) rechtwinklig zu einem Boden, auf welchem die Vorrichtung angeordnet ist, in eine Vertikalrichtung verläuft.

6. Vorrichtung nach einem der vorangegangenen Ansprüche, **dadurch gekennzeichnet, dass** der Prüfkörper (30) kreiszylindrisch ausgebildet ist, und dass
eine Mittelachse (M) des Prüfkörpers (30) parallel zu der Drehachse (D) verläuft.

7. Vorrichtung nach einem der vorangegangenen Ansprüche, **dadurch gekennzeichnet, dass** die Vorrichtung
eine erste Antriebseinheit (41) zum rotatorischen Antrieb des Drehtischs (20) und
eine zweite Antriebseinheit (42) zum translatorischen Antrieb des Prüfkörpers (30) umfasst.

8. Vorrichtung nach Anspruch 7, **dadurch gekennzeichnet, dass**
die erste Antriebseinheit (41) einen Elektromotor und ein Getriebe aufweist, und/oder dass
die zweite Antriebseinheit (42) einen Elektromotor und ein Getriebe aufweist.

9. Vorrichtung nach einem der Ansprüche 7 bis 8, **dadurch gekennzeichnet, dass** die Vorrichtung eine Recheneinheit umfasst, welche
eine Steuereinheit zur Ansteuerung der Antriebseinheiten (41, 42),
eine Prüfeinheit zur Durchführung von Prüfungen, ob der Prüfkörper (30) von dem Schutzfeld erfasst wird, und
eine Speichereinheit zur Speicherung von Prüfergebnissen aufweist.

10. Verfahren zur Prüfung eines von einem Laserscanner eines Fahrzeugs (50) überwachten Schutzfelds mittels einer Vorrichtung nach einem der vorangegangenen Ansprüche, wobei
ein Fahrzeug (50) auf dem Drehtisch (20) positioniert wird,
der Drehtisch (20) mit dem Fahrzeug (50) um die Drehachse (D) gedreht wird,
der Prüfkörper (30) relativ zu der Drehachse (D) translatorisch bewegt wird, und
für eine Mehrzahl von Prüfpositionen geprüft wird,
ob der Prüfkörper (30) von dem Schutzfeld erfasst wird, wobei
jeder Prüfposition
eine definierte Winkelposition des Drehtischs (20) und
ein definierter Abstand des Prüfkörpers (30) zu der Drehachse (D) zugeordnet ist.

## Claims

1. A device for checking a protective field monitored by a laser scanner of a vehicle (50), comprising
a turntable (20) for receiving a vehicle (50), and
a test body (30), wherein
the turntable (20) is rotatable about an axis of rotation (D), and
the test body (30) is movable in translation relative to the axis of rotation (D), **characterised in that**
the device comprises a base body (10), and a rail (15) fastened to the base body (10), with
the turntable (20) being rotatable relative to the base body (10), and
the test body (30) being movable along the rail (15), and **in that**
a receiving plate (22) is fastened to the turntable (20),
which receiving plate has a plurality of clamps (24) for securing the vehicle (50).

2. A device according to claim 1, **characterised in that**
the test body (30) is movable in a radial direction (R) relative to the axis of rotation (D).

3. A device according to one of the preceding claims, **characterised in that** the rail (15) extends in a radial direction (R) relative to the axis of rotation (D).

4. A device according to one of the preceding claims, **characterised in that** the rail (15) comprises a plurality of segments which, beginning at the base body (10), are arranged one behind another in the radial direction (R).

5. A device according to one of the preceding claims, **characterised in that** the axis of rotation (D) runs in a vertical direction at right-angles to a floor on which the device is arranged.

6. A device according to one of the preceding claims, **characterised in that** the test body (30) takes the form of a regular cylinder, and **in that** a centre axis (M) of the test body (30) runs parallel to the axis of rotation (D).

7. A device according to one of the preceding claims, **characterised in that** the device
comprises a first drive unit (41) for driving the turntable (20) in rotation and
a second drive unit (42) for driving the test body (30) in translation.

8. A device according to claim 7, **characterised in that**
the first drive unit (41) has an electric motor and a gear unit, and/or **in that**
the second drive unit (42) has an electric motor and a gear unit.

9. A device according to one of claims 7 to 8, **characterised in that** the device comprises an arithmetic logic unit which has
a control unit for controlling the drive units (41, 42),
a test unit for carrying out checks as to whether the test body (30) is detected by the protective field, and
a memory unit for storing test results.

10. A method for checking a protective field monitored by a laser scanner of a vehicle (50), by means of a device according to one of the preceding claims, wherein a vehicle (50) is positioned on the turntable (20),
the turntable (20) with the vehicle (50) is turned about the axis of rotation (D),
the test body (30) is moved in translation relative to the axis of rotation (D), and
it is checked for a plurality of test positions
whether the test body (30) is detected by the protective field, with
each test position
being assigned a defined angular position of the turntable (20) and
a defined distance of the test body (30) from the axis of rotation (D).

## Revendications

1. Dispositif d'examen d'un champ de protection surveillé par un scanner laser d'un véhicule (50), comprenant
un plateau tournant (20) permettant d'accueillir un véhicule (50) et
un corps d'examen (30),
le plateau tournant (20) pouvant tourner autour d'un axe de rotation (D), et
le corps d'examen (30) étant mobile de manière transitoire par rapport à l'axe de rotation (D),
**caractérisé en ce que**
le dispositif comprend un corps de base (10) et un rail (15) fixé au corps de base (10),
le plateau tournant (20) pouvant tourner par rapport au corps de base (10), et
le corps d'examen (30) étant mobile le long du rail (15), et **en ce que**
une plaque d'accueil (22) est fixée au plateau tournant (20),
qui présente plusieurs attaches (24) permettant de fixer le véhicule (50).

2. Dispositif selon la revendication 1, **caractérisé en ce que**
le corps d'examen (30) est mobile dans une direction radiale (R) par rapport à l'axe de rotation (D).

3. Dispositif selon l'une quelconque des revendications précédentes, **caractérisé en ce que** le rail (15) s'étend dans une direction radiale (R) par rapport à l'axe de rotation (D).

4. Dispositif selon l'une quelconque des revendications précédentes, **caractérisé en ce que**
le rail (15) comprend plusieurs segments qui sont agencés les uns derrière les autres à partir du corps de base (10) dans la direction radiale (R).

5. Dispositif selon l'une quelconque des revendications précédentes, **caractérisé en ce que**
l'axe de rotation (D) s'étend dans une direction verticale, perpendiculairement à un sol sur lequel est agencé le dispositif.

6. Dispositif selon l'une quelconque des revendications précédentes, **caractérisé en ce que**
le corps d'examen (30) est réalisé de manière cylindrique circulaire et **en ce qu'**un axe central (M) du corps d'examen (30) est parallèle à l'axe de rotation (D).

7. Dispositif selon l'une quelconque des revendications précédentes, **caractérisé en ce que**
le dispositif comprend une première unité d'entraînement (41) permettant un entraînement en rotation du plateau tournant (20) et
une deuxième unité d'entraînement (42) permettant un entraînement en translation du corps d'examen (30).

8. Dispositif selon la revendication 7, **caractérisé en ce que**
la première unité d'entraînement (41) présente un moteur électrique et une transmission, et/ou la deuxième unité d'entraînement (42) présente un moteur électrique et une transmission.

9. Dispositif selon l'une quelconque des revendications 7 à 8, **caractérisé en ce que** le dispositif comprend une unité de calcul, qui présente une unité de commande permettant de commander les unités d'entraînement (41, 42),
une unité d'examen permettant de mettre en œuvre des vérifications afin de déterminer si le corps d'examen (30) est détecté par le champ de protection, et
une unité de stockage permettant de stocker les résultats d'examen.

10. Procédé d'examen d'un champ de protection surveillé par un scanner laser d'un véhicule (50), au moyen d'un dispositif selon l'une quelconque des revendications précédentes,
un véhicule (50) étant positionné sur le plateau tournant (20),
le plateau tournant (20) avec le véhicule (50) étant mis en rotation autour de l'axe de rotation (D),
le corps d'examen (30) étant déplacé en translation par rapport à l'axe de rotation (D), et
pour une pluralité de positions d'examen, une vérification intervient pour déterminer si le corps d'examen (30) est détecté par le champ de protection,
chaque position d'examen étant associée
à une position angulaire définie du plateau tournant (20) et
à une distance définie entre le corps d'examen (30) et l'axe de rotation (D).
